# EUROPÄISCHE PATENTANMELDUNG

(11) **EP 3 489 301 A1**
(43) Veröffentlichungstag der Anmeldung: **29.05.2019**
(21) Anmeldenummer: 17203874.7
(22) Anmeldetag: 27.11.2017
(51) Int. Cl.: C08L 51/00, C08K 3/013, C08J 3/22

(54) **FARBMASTERBATCH AUF BASIS VON VINYLCHLORID-PFROPFCOPOLYMERISATEN**

(71) Anmelder: Vinnolit GmbH & Co. KG, 85737 Ismaning (DE)
(72) Erfinder: HABERL, Goerg, DE-84489 Burghausen (DE)
(74) Vertreter: Forstmeyer, Dietmar

(57) **Zusammenfassung**

Die vorliegende Erfindung betrifft die Verwendung von Vinylchlorid-Pfropfcopolymerisaten zur Herstellung eines Farbmasterbatches sowie ein Farbmasterbatch auf Basis von Vinylchlorid-Pfropfcopolymerisaten.

## Beschreibung

Die vorliegende Erfindung betrifft die Verwendung von Vinylchlorid-Pfropfcopolymerisaten zur Herstellung eines Farbmasterbatches sowie ein Farbmasterbatch auf Basis von Vinylchlorid-Pfropfcopolymerisaten.

Unter dem Begriff Farbmasterbatch versteht man Kunststoffadditive in Form von Granulaten mit Gehalten an Farbmitteln, die höher sind als in der Endanwendung. Sie werden dem Rohpolymer zum Einfärben beigemischt.

Zum Einfärben von Hart-PVC (PVC-U) und Weich-PVC (PVC-P) werden neben flüssigen Systemen auch Wachse als Träger für die Pigmente eingesetzt. Farbmasterbatches basierend auf PVC-P bzw. Universalträger (beispielsweise mit einem EVA-Träger) sind ebenfalls weit verbreitet.

Im Gegensatz zu vielen anderen Kunststoffen reagiert PVC sensibel gegenüber Additiven, die das Verarbeitungsverhalten beeinflussen. PVC Rezepturen enthalten Stabilisatoren, Außen- und Innengleitmittel, Verarbeitungshilfen und, je nach Anwendungsgebiet, Füllstoffe, Antioxidantien, UV-Absorber, Co-Stabilisatoren und Pigmente. Die für die ausgewählte Verarbeitungstechnolgie und das gewünschte Einsatzgebiet optimierte Rezeptur kann durch ein ungeeignetes Farbmasterbatch empfindlich gestört werden.

Bei den derzeit auf dem Markt befindlichen Farbmasterbatches werden Trägerstoffe eingesetzt, die sowohl die Verarbeitung als auch die Endeigenschaften des eingefärbten Artikels negativ beeinflussen könnten. Dabei können beispielsweise die folgenden Nachteile auftreten: Verschiebung der Rheologie durch Gleitwirkung, Migration (bei PVC-P), Glanzreduzierung, Reduzierung der mechanischen Werte, Reduzierung der Vicat-Erweichungstemperatur, Plate-out, Ausschwitzerscheinungen (Blooming), Trübung, Stippen durch ungenügende Dispergierung sowie Gelierverzögerung.

Aufgabe der vorliegenden Erfindung war es daher, ein Farbmasterbatch bereitzustellen, welches die Nachteile des Stands der Technik überwindet.

Es wurde nunmehr überraschenderweise gefunden, dass sich vernetzte Vinylchlorid-Pfropfcopolymerisate, welche als thermoplastische Elastomere aus der EP 0 647 663 A1 bekannt sind, hervorragend als Träger für Farbmasterbatches eignen.

Gegenstand der Erfindung ist die Verwendung der in der EP 0 647 663 A1 beschriebenen Vinylchlorid-Pfropfcopolymerisate als Träger für Farbmasterbatches, die insbesondere zum Einfärben von PVC-U und PVC-P geeignet sind. Auf die in der EP 0 647 663 A1 offenbarten Vinylchlorid-Pfropfcopolymerisate und auf deren Herstellung wird ausdrücklich Bezug genommen.

Die vorliegende Erfindung betrifft die Verwendung von Vinylchlorid-Pfropfcopolymerisaten enthaltend:
A) 35 bis 60 Gew.-%, bezogen auf das Gesamtgewicht des Vinylchlorid-Pfropfcopolymerisats, eines aufgepfropften, vernetzten Copolymers, herstellbar durch Copolymerisation von:
   80 bis 99.95 Gew.-% Vinylchlorid,
   0.05 bis 3.0 Gew.-% mehrfach ethylenisch ungesättigten Comonomeren sowie
   0 bis 19.95 Gew.-% weiteren copolymerisierbaren, ethylenisch ungesättigten Comonomeren,
      oder
   35 bis 60 Gew.-%, bezogen auf das Gesamtgewicht des Vinylchlorid-Pfropfcopolymerisats, eines aufgepfropften (Co)polymers, herstellbar durch (Co)polymerisation von
   80 bis 100 Gew.-% Vinylchlorid sowie
   0 bis 20 Gew.-% weiteren copolymerisierbaren, ethylenisch ungesättigten Comonomeren, bei einer Polymerisationstemperatur von 0 bis 45°C,
      und
B) 40 bis 65 Gew.-%, bezogen auf das Gesamtgewicht des Vinylchlorid-Propfcopolymerisats, einer vernetzten Pfropfgrundlage enthaltend
ein vernetztes Acrylsäureester-Copolymerisat mit 0.01 bis 5 Gew.-% mehrfach ethylenisch ungesättigten Comonomer-Einheiten sowie gegebenenfalls weiteren mit Acrylsäureestern copolymerisierbaren Comonomer-Einheiten,
zur Herstellung eines Farbmasterbatches.

Vorzugsweise enthält das Vinylchlorid-Pfropfcopolymerisat 40 bis 55 Gew.-% des aufgepfropften, vernetzten Copolymers A) oder des aufgepfropften, unvernetzten (Co)polymers A) und 45 bis 60 Gew.-% der vernetzten Pfropfgrundlage B).

Zur Vernetzung des aufgepfropften Vinylchlorid-Copolymers A) geeignete, mehrfach ethylenisch ungesättigte Comonomere sind solche, welche keine konjugierten Doppelbindungen aufweisen, beispielsweise Divinylester von Dicarbonsäuren wie Divinyladipat; Diallylester von Polycarbonsäuren wie Diallylphthalat, Diallylfumarat; Divinylether von mehrwertigen Alkoholen wie Ethylenglykoldivinylether; Divinylaromaten wie Divinylbenzol; Allyl- und Methallylester von ethylenisch ungesättigten Monocarbonsäuren wie Allylmethacrylat; Di- und Triacrylate von mehrwertigen Alkoholen wie Ethylenglykoldimethacrylat, Propylenglykoldimethacrylat, Diethylenglykoldiacrylat (DEGDA), Diethylenglykoldimethacrylat (DEGDMA), Trimethylenglykoldiacrylat, Butylenglykoldiacrylat, Pentamethylenglykoldiacrylat, Glyceryltriacrylat, Trimethylolpropantriacrylat (TMPTA), Trimethyolpropantrimethacrylat (TMPTMA); Tetraacrylate mehrwertiger Alkohole wie Pentaerythrittetraacrylat und Triallylcyanurat.

Bevorzugt werden Diallylphthalat, Divinyladipat, Triallylcyanurat, Allylmethacrylat, Ethylenglykoldimethacrylat, Butylenglykoldiacrylat, Trimethylenglykoldiacrylat und Trimethyolpropantriacrylat oder deren Gemische. Vorzugsweise beträgt die Menge an copolymerisiertem Vernetzer 0,1 bis 1,5 Gew.-%, bezogen auf das Gesamtgewicht des aufgepfropften Copolymers A).

Neben Vinylchlorid und gegebenenfalls mehrfach ethylenisch ungesättigten Comonomeren kann das aufgepfropfte Copolymer A) noch ein oder mehrere weitere copolymerisierte, ethylenisch ungesättigte Comonomere enthalten. Beispiele hierfür sind Vinylester von gesättigten Carbonsäuren mit 2 bis 12 C-Atomen wie Vinylacetat, Vinylpropionat, Vinyllaurat oder Versaticsäurevinylester; (Meth)acrylsäureester von Alkoholen mit 1 bis 8 C-Atomen, wie Methylacrylat, Methylmethacrylat, n-Butylacrylat, n-Butylmethacrylat, t-Butylacrylat, 2-Ethylhexylacrylat; ethylenisch ungesättigte Mono- und Dicarbonsäuren wie Acrylsäure, Methacrylsäure, Maleinsäure, Fumarsäure; Mono- und Diester von ethylenisch ungesättigten Dicarbonsäuren wie Diisopropylfumarat; Vinylaromaten wie Styrol; sowie Olefine wie Ethylen.

Der Gehalt an solchen Comonomeren sollte für den Fall, dass Monomere copolymerisiert werden, deren Homopolymerisate eine Glasübergangstemperatur T_{g} < 20°C besitzen, nicht mehr als 5 Gew.-% betragen, bezogen auf das Gesamtgewicht des Copolymers A). Für den Fall, dass Monomere copolymerisiert werden, deren Homopolymerisate eine Glasübergangstemperatur T_{g} ≥ 20°C besitzen, kann deren Anteil bis 20 Gew.-% betragen, bezogen auf das Gesamtgewicht des Copolymers A).

Enthält das aufgepfropfte Copolymer A) keine vernetzend wirkenden Comonomereinheiten, so ist es bevorzugt, dass die Pfropfung bei einer Polymerisationstemperatur erfolgt, die bei der Homopolymerisation von Vinylchlorid zu VC-Polymerisaten mit einem K-Wert ≥ 78 (DIN 53726) führt. Dies entspricht einer Polymerisationstemperatur von 0 bis 45°C.

Die bei der vorliegenden Erfindung verwendete Pfropfgrundlage enthält ein vernetztes Acrylsäureester-Copolymerisat mit 0.01 bis 5 Gew.-% mehrfach ethylenisch ungesättigten Comonomer-Einheiten sowie gegebenenfalls weiteren copolymerisierbaren Comonomer-Einheitenen oder Gemische solcher Copolymerisate.

Geeignete Acrylsäureester-Copolymerisate sind solche aus einem oder mehreren Acrylsäureestern von Alkoholen mit 1 bis 12 C-Atomen, wie beispielsweise Methylacrylat, Ethylacrylat, Propylacrylat, n-Butylacrylat, 2-Ethylhexylacrylat.

Geeignete, mehrfach ethylenisch ungesättigte Comonomer-Einheiten können auf den bereits weiter oben genannten Comonomeren basieren bzw. aus diesen hergestellt werden. Vorzugsweise enthält die vernetzte Acrylat-Pfropfgrundlage 0.05 bis 0.5 Gew%, bezogen auf das Gesamtgewicht der Pfropfgrundlage, copolymerisiertes Diallylphthalat, Divinyladipat, Triallylcyanurat, Allylmethacrylat, Ethylenglykoldimethacrylat, Butylenglykoldiacrylat, Trimethylenglykoldiacrylat, Trimethyolpropantriacrylat oder deren Gemische.

Beispiele für weitere copolymerisierbare, ethylenisch ungesättigte Comonomere sind Vinylester von gesättigten Carbonsäuren mit 2 bis 12 C-Atomen wie Vinylacetat, Vinylpropionat, Vinyllaurat oder Versaticsäurevinylester; Methacrylsäureester von Alkoholen mit 1 bis 8 C-Atomen, wie Methylmethacrylat, n-Butylmethacrylat; ethylenisch ungesättigte Mono- und Dicarbonsäuren wie Acrylsäure, Methacrylsäure, Maleinsäure, Fumarsäure; Mono- und Diester von ethylenisch ungesättigten Dicarbonsäuren wie Diisopropylfumarat; Vinylaromaten wie Styrol; Olefine wie Ethylen; Sulfonate wie Vinylsulfonat, 2-Acrylamido-2-methylpropansulfonat.

Bevorzugt sind vernetzte Acrylsäureester-Copolymerisate aus n-Butylacrylat und/oder 2-Ethylhexylacrylat. Als Pfropfgrundlage B) bevorzugt sind auch vernetzte Acrylsäurester-Ethylen-Vinylester-Copolymerisate mit einem Acrylsäureester-Gehalt von 35 bis 70 Gew.-%, einem Ethylen-Gehalt von 10 bis 30 Gew.-% und Vinylester-Gehalt von 20 bis 50 Gew.-%, bezogen auf das Gesamtgewicht des Copolymerisats B), insbesonders vernetzte Copolymerisate enthaltend n-Butylacrylat-, Ethylen- und Vinylacetat-Einheiten. Gegebenenfalls können auch Gemische der genannten Acrylsäureester-Copolymerisate enthalten sein.

Besonders bevorzugt werden gemäß der vorliegenden Erfindung Vinylchlorid-Pfropfcopolymerisate verwendet, enthaltend:
A) 40 bis 55 Gew.-%, bezogen auf das Gesamtgewicht des Pfropfcopolymerisats, eines aufgepfropften, vernetzten Copolymers aus
   98.5 bis 99.9 Gew.-% Vinylchlorid sowie
   0.1 bis 1.5 Gew.-% eines oder mehrerer mehrfach ethylenisch ungesättigter Comonomere aus der Gruppe Diallylphthalat, Allylmethacrylat, Ethylenglykoldimethacrylat, Butylenglykoldiacrylat, Trimethylenglykoldiacrylat, Trimethyolpropantriacrylat,
   oder
   40 bis 55 Gew.-%, bezogen auf das Gesamtgewicht des Vinylchlorid-Pfropfcopolymerisats, eines aufgepfropften VC-Polymers, herstellbar durch Pfropfpolymerisation von Vinylchlorid bei einer Polymerisationstemperatur von 0 bis 45°C, und
B) 45 bis 60 Gew.-%, bezogen auf das Gesamtgewicht des Pfropfcopolymerisats, einer vernetzten Pfropfgrundlage bestehend aus einem vernetzten Copolymerisat von n-Butylacrylat und/oder 2-Ethylhexylacrylat, oder aus einem vernetzten Acrylsäureester-Ethylen-Vinylacetat-Copolymerisat mit einem Acrylat-Gehalt von 35 bis 70 Gew.-% oder Gemischen der genannten Copolymerisate, wobei die Copolymerisate mit 0.05 bis 0.5 Gew.-% eines oder mehrerer copolymerisierten, mehrfach ethylenisch ungesättigten Comonomeren aus der Gruppe Diallylphthalat, Allylmethacrylat, Ethylenglykoldimethacrylat, Butylenglykoldiacrylat, Trimethylenglykoldiacrylat, Trimethyolpropantriacrylat vernetzt sind.

Die Herstellung der als Träger zu verwendenden Vinylchlorid-Pfropfcopolymerisate ist in der EP 0 647 663 A1 ausführlich beschrieben.

Weiterhin betrifft die vorliegende Erfindung ein Farbmasterbatch, das den oben beschriebenen Träger und ein Pigment, und gegebenenfalls weitere Additive umfasst.

Als weitere Additive können z.B. Nanofüllstoffe, Stabilisatoren, Antistatika, Flammschutzmittel, Haftvermittler, Nukleierungsmittel, Treibmittel, antibakterielle Mittel und Mischungen hiervon enthalten sein. Die Menge der Additive beträgt dabei bevorzugt 1 bis 80 Gew.-%, bezogen auf das Gewicht des gebildeten Vinylchlorid-Pfropfcopolymerisats.

Zur erfindungsgemäßen Verwendung als Träger für ein Farbmasterbatch wird das vernetzte Vinylchlorid-Pfropfcopolymerisat mit mindestens einem organischen oder anorganischen Pigment gemischt. Das Mischen erfolgt beispielsweise auf in der PVC-Industrie üblichen Schnellmischern, vorzugsweise im Gewichtsverhältnis von 80:20 bis 20:80; besonders bevorzugt von 75:25 bis 25:75.

Die so hergestellte Mischung kann dann auf üblichen Anlagen granuliert und so zu einem staubfreien, gut handhabbaren Farbmasterbatch verarbeitet werden. Die Größe der Granulatkörner kann dabei variieren.

Als Pigmente kommen sowohl anorganische als auch organische Pigmente in Frage. Zu den anorganischen Pigmenten gehören solche der Gruppe der Oxide, z.B. Eisenoxid (braun, rot, schwarz), Chromoxid (grün), Titandioxid, oder Kohlenstoff, z.B. Ruß-schwarz, oder Chromate, z.B. Bleichromat-gelb, Molybdatorange, oder Komplexe anorganischer Buntpigmente, z.B. Chromtitangelb, Chromeisenbraun, Kobaltblau, Nickeltitangelb, Zinkeisenbraun, Wismutvanadatgelb, oder Sulfide, z.B. Cadmiumsulfid (gelb, orange, rot), Cersulfid (gelb, orange, rot), Ultramarin (violett, blau), Zinksulfid (weiß). Zu den organischen Pigmenten zählen Azopigmente, z.B. verlackte Azopigmente (gelb, rot), Disazopigmente (gelb, orange, rot), Disazokondensationspigmente (gelb, rot), Benzimidazolpigmente (gelb, orange), Metallkomplexpigmente (gelb), Insoindolinpigmente (gelb), Insoindolinonpigmente (gelb), oder auch polyzyklische Pigmente, z.B. Chinacridon (violett, blau), Chinophthalon (gelb), Diketo-Pyrrolo-Pyrrol (orange, rot, violett), Disoxazinpigmente (violett), Indanthron (blau), Perylen (rot, violet), Phthalocyanin (blau, grün). Als Farbstoffe kommen sowohl lösliche Farbstoffe, z.B. Anthrachinon, Chinophthalon, Pyrazolon, Perinon und Monoazofarbstoffe, als auch fluoreszierende Farbstoffe, z.B. Perylen, Naphthalimid, Cuminderivate, Thioindigo, Thioxanthen-Benzanthron in Frage.

Das erfindungsgemäße Farbmasterbatch enthält Träger und Pigment vorzugsweise im Gewichtsverhältnis von 80:20 bis 20:80; besonders bevorzugt von 75:25 bis 25:75.

Die zur Stabilisierung von PVC gebräuchlichen (Wärme und Licht) - Stabilisatoren (Ca/Zn. Ba/Zn, Sn, organische Stabilisatoren) werden, wie dem Fachmann bekannt, im Mischer vorgelegt und die Gesamtmischung durch Friktion auf Temperatur (bis max. 150°C) gebracht. Die Stabilisatoren werden in üblichen Mengen von vorzugsweise 1,0 bis 5,0 Gew.-%, bezogen auf das Vinylchlorid-Polymerisat (VC-Polymerisat), zugegeben.

Falls erforderlich, können die VC-Polymerisate noch Füllstoffe, beispielsweise Kreide, Quarzmehl, Talkum, oder weitere Pigmente wie beispielsweise Titandioxid oder Ruß, enthalten. Diese Füllstoffe und/oder weiteren Pigmente werden vorzugsweise in Mengen von 5 bis 100 Gew.-%, bezogen auf das VC-Polymerisat, eingesetzt.

Zur Verbesserung der Schmelzrheologie können den PVC-Massen gegebenenfalls noch interne Gleitmittel, vorzugsweise in Mengen von 0,1 bis 1,0 Gew.-%, bezogen auf das VC-Polymerisat, zugegeben werden. Beispiele hierfür sind Fettsäurepartialester des Glycerins wie Glycerinmonooleat oder Phthalsäureester von Fettalkoholen wie Distearylphthalat.

Das erfindungsgemäße Farbmasterbatch kann auch in weichmacherhaltigen Weich-PVC-Rezepturen verwendet werden. Geeignete Weichmacher sind beispielsweise Phthalsäureester wie Dioctylphthalat, Adipinsäureester wie Di-2-Ethylhexyl- Adipat oder Phosphorsäureester wie Diphenyl-2-Ethylhexylphosphat, oder weichmachende Polymere wie Ethylen-Vinylacetat-Copolymere, Ethylen-Vinylacetat-Kohlenmonoxid-Terpolymere und thermoplastisches Polyurethan.

Bevorzugt ist die Verwendung des erfindungsgemäßen Farbmasterbatches in weichmacherfreien Hart-PVC-Rezepturen. Zur Verbesserung der Schmelzrheologie können diese gegebenenfalls noch polymere Verarbeitungshilfen wie beispielsweise Copolymerisate von Methylmethacrylat mit Styrol oder Butylacrylat, vorzugsweise in Mengen von 0,5 bis 5 Gew.-%, bezogen auf den PVC-Anteil, oder auch interne Gleitmittel in den oben genannten Mengen enthalten.

### Beispiele

Es wurden die folgenden Farbmasterbatches hergestellt:
Extruder: Weber DS 85 16 D, S-Schnecke
Temperaturen: Zylinder Zone 1 150°C,
   Zylinder Zone 2 160°C
   Zylinder Zone 3 170°C
   Zylinder Zone 4 170°C
   Zylinder Zone 5 175°C
   Zylinder Zone 6 175°C
Schnecken - Drehzahl 30 U/min; Drehzahl Dosierschnecke 4 U/min Als Werkzeug wurde ein Granulierkopf verwendet.

**Tabelle 1:**

| ***Inhaltsstoff*** | ***Beispiel 1*** | ***Beispiel 2*** |
|---|---|---|
| ***Handelsname* - *Handelstyp*** | ***HA 3350*/*6*** | ***HA 3350*/*7*** |
| K 707 E (Vinnolt) | 30,0000 | 70,0000 |
| Heucodur Brown 869 | 70,0000 | - |
| Heucodur Yellow 3975 | - | 30,0000 |
| Mark CZ 2001/1 (Ca/Zn Stabilisator) | 1,2500 | 1,2500 |
| Edenol D 81 (Epoxidiertes Sojabohnenöl) | 1,5000 | 1,5000 |
| Paraloid K 120 N (Acrylische Verarbeitungshilfe) | 1,0000 | 1,0000 |
| Loxiol G 70 (Gleitmittel) | 0,2500 | 0,2500 |

Erfindungsgemäßer Träger: K 707 E; Pigmente: Heucodur Brown 869 und Heucodur Yellow 3975; Stabilisatoren: Mark CZ 2001/1 und Edenol D 81; Verarbeitungshilfsmittel Paraloid K 120 N; Gleitmittel: Loxiol G 70.

Mit diesen erfindungsgemäßen Farbmasterbatches wurden Fensterprofile hergestellt. Die Zusammensetzungen sind in Tabelle 2 gezeigt:
Extruder: Cincinnati CMT-45, Schnecke konisch gegenläufig
Temperaturen: Schnecke 155 - 160°C
   Zylinder Zone 1 165°C
   Zylinder Zone 2 170°C
   Zylinder Zone 3 180°C
   Zylinder Zone 4 195°C
   Werkzeug 206°C
Schnecken - Drehzahl 22 U/min
Fensterprofil - Werkzeug

**Tabelle 2:**

| | **Referenz-Bsp (ohne Pigment)** | **Bsp. 3** | **Bsp. 4** | **Bsp. 5** | **Bsp. 6** | **Vgl.-Bsp.1** | **Vgl.-Bsp. 2** | **Vgl.-Bsp. 3** | **Vgl.-Bsp. 4** |
|---|---|---|---|---|---|---|---|---|---|
| ***Inhaltsstoff*** | | | | | | | | | |
| Vinnolit S 3268 S-PVC | 95 | 95 | 95 | 95 | 95 | 95 | 95 | 95 | 95 |
| Vinnolit K 707 E Pfropfcopolymer | 10 | 10 | 10 | 10 | 10 | 10 | 10 | 10 | 10 |
| Bäropan R 90901 Stabilisator | 3,6 | 3,6 | 3,6 | 3,6 | 3,6 | 3,6 | 3,6 | 3,6 | 3,6 |
| Kronos 2220 Titandioxyd | 4 | ohne | ohne | ohne | ohne | ohne | ohne | ohne | ohne |
| Hydrocarb 95T Kreide | 8 | 8 | 8 | 8 | 8 | 8 | 8 | 8 | 8 |
| Gelb-HA 3350/7 | | 4 | 6 | | | | | | |
| Braun-HA 3350/6 | | | | 4 | 6 | | | | |
| Heucobatch Yellow 190 07 99 | | | | | | 4 | 6 | | |
| Heucobatch Brown 890 103 | | | | | | | | 4 | 6 |

| **Prüfmethode** | | | | | | | | | |
|---|---|---|---|---|---|---|---|---|---|
| Schlagzähigkeit (DIN ISO 179-1, 23°C) | 24,38 | 100,79 | 102,04 | 23,8 | 101,81 | 18,33 | 17,28 | 24,03 | 18,33 |
| Glanz (DIN ISO 67530, 60 °C) | 50,9 | 47,4 | 50,6 | 49,3 | 50,8 | 35,2 | 35,2 | 34,7 | 34,2 |
| Schlagzäh igkeit (RAL 716-1, 23 °C) | 53,0 | 54,0 | 55,2 | 52,0 | 52,7 | 36,8 | 25,1 | 48,9 | 48,9 |
| Vicat A (DIN EN ISO 306) Mittelwert °C | 89,0 | 89,1 | 88,6 | 88,5 | 88,6 | 88,0 | 87,5 | 86,5 | 87,5 |

Durch Einsatz der erfindungsgemäß hergestellten Farbmasterbatches (Beispiel 3, 4, 5, 6) bleibt die Schlagzähigkeit auf einem hohen Niveau bzw. wird weiter verbessert. Der in vielen Fällen gewünschte hohe Glanz der Extrudate bleibt im Gegensatz zu den Vergleichsbeispielen (Vgl. Bsp, 1, 2, 3, 4) erhalten.

Besonders bei pigmentierten Artikeln für die Außenverwendung wird eine möglichst hohe Vicat-Erweichungstemperatur angestrebt. Der Einsatz der erfindungsgemäß hergestellten Farbmasterbatches erwies sich hier als vorteilhaft.

## Patentansprüche

1. Verwendung eines Vinylchlorid-Pfropfcopolymerisats enthaltend:
A) 35 bis 60 Gew.-%, bezogen auf das Gesamtgewicht des Vinylchlorid-Pfropfcopolymerisats, eines aufgepfropften, vernetzten Copolymers, herstellbar durch Copolymerisation von:
80 bis 99.95 Gew.-% Vinylchlorid,
0.05 bis 3.0 Gew.-% mehrfach ethylenisch ungesättigten Comonomeren sowie
0 bis 19.95 Gew.-% weiteren copolymerisierbaren, ethylenisch ungesättigten Comonomeren,
oder
35 bis 60 Gew.-%, bezogen auf das Gesamtgewicht des Vinylchlorid-Pfropfcopolymerisats, eines aufgepfropften (Co)polymers, herstellbar durch (Co)polymerisation von
80 bis 100 Gew.-% Vinylchlorid sowie
0 bis 20 Gew.-% weiteren copolymerisierbaren, ethylenisch ungesättigten Comonomeren, bei einer Polymerisationstemperatur von 0 bis 45°C,
und
B) 40 bis 65 Gew.-%, bezogen auf das Gesamtgewicht des Vinylchlorid-Propfcopolymerisats, einer vernetzten Pfropfgrundlage enthaltend
ein vernetztes Acrylsäureester-Copolymerisat mit 0.01 bis 5 Gew.-% mehrfach ethylenisch ungesättigten Comonomer-Einheiten sowie gegebenenfalls weiteren mit Acrylsäureestern copolymerisierbaren Comonomer-Einheiten,
zur Herstellung eines Farbmasterbatches.

2. Verwendung nach Anspruch 1, wobei die mehrfach ethylenisch ungesättigten Comonomere keine konjugierten Doppelbindungen aufweisen, wie beispielsweise Divinylester von Dicarbonsäuren wie Divinyladipat; Diallylester von Polycarbonsäuren wie Diallylphthalat, Diallylfumarat; Divinylether von mehrwertigen Alkoholen wie Ethylenglykoldivinylether; Divinylaromaten wie Divinylbenzol; Allyl- und Methallylester von ethylenisch ungesättigten Monocarbonsäuren wie Allylmethacrylat; Di- und Triacrylate von mehrwertigen Alkoholen wie Ethylenglykoldimethacrylat, Propylenglykoldimethacrylat, Diethylenglykoldiacrylat (DEGDA), Diethylenglykoldimethacrylat (DEGDMA), Trimethylenglykoldiacrylat, Butylenglykoldiacrylat, Pentamethylenglykoldiacrylat, Glyceryltriacrylat, Trimethylolpropantriacrylat (TMPTA), Trimethyolpropantrimethacrylat (TMPTMA); Tetraacrylate mehrwertiger Alkohole wie Pentaerythrittetraacrylat; Triallylcyanurat.

3. Verwendung nach Anspruch 1, wobei die mehrfach ethylenisch ungesättigten Comonomere ausgewählt werden aus Diallylphthalat, Divinyladipat, Triallylcyanurat, Allylmethacrylat, Ethylenglykoldimethacrylat, Butylenglykoldiacrylat, Trimethylenglykoldiacrylat und Trimethyolpropantriacrylat oder deren Gemische.

4. Verwendung nach einem der vorhergehenden Ansprüche, wobei die weiteren copolymerisierbaren, ethylenisch ungesättigten Comonomere ausgewählt werden aus: Vinylestern von gesättigten Carbonsäuren mit 2 bis 12 C-Atomen wie Vinylacetat, Vinylpropionat, Vinyllaurat oder Versaticsäurevinylester; (Meth)acrylsäureestern von Alkoholen mit 1 bis 8 C-Atomen, wie Methylacrylat, Methylmethacrylat, n-Butylacrylat, n-Butylmethacrylat, t-Butylacrylat, 2-Ethylhexylacrylat; ethylenisch ungesättigten Mono- und Dicarbonsäuren wie Acrylsäure, Methacrylsäure, Maleinsäure, Fumarsäure; Mono- und Diestern von ethylenisch ungesättigten Dicarbonsäuren wie Diisopropylfumarat; Vinylaromaten wie Styrol; und Olefinen wie Ethylen.

5. Verwendung nach einem der vorhergehenden Ansprüche, wobei das vernetzte Acrylsäureester-Copolymerisat aus einem oder mehreren Acrylsäureestern von Alkoholen mit 1 bis 12 C-Atomen, wie beispielsweise Methylacrylat, Ethylacrylat, Propylacrylat, n-Butylacrylat, 2-Ethylhexylacrylat hergestellt wurde.

6. Verwendung des Vinylchlorid-Pfropfcopolymerisats nach Anspruch 1, enthaltend:
A) 40 bis 55 Gew.-%, bezogen auf das Gesamtgewicht des Pfropfcopolymerisats, eines aufgepfropften, vernetzten Copolymers aus
98.5 bis 99.9 Gew.-% Vinylchlorid sowie
0.1 bis 1.5 Gew.-% eines oder mehrerer mehrfach ethylenisch ungesättigter Comonomere aus der Gruppe Diallylphthalat, Allylmethacrylat, Ethylenglykoldimethacrylat, Butylenglykoldiacrylat, Trimethylenglykoldiacrylat, Trimethyolpropantriacrylat,
oder
40 bis 55 Gew.-%, bezogen auf das Gesamtgewicht des Vinylchlorid-Pfropfcopolymerisats, eines aufgepfropften VC-Polymers, herstellbar durch Pfropfpolymerisation von Vinylchlorid bei einer Polymerisationstemperatur von 0 bis 45°C, und
B) 45 bis 60 Gew.-%, bezogen auf das Gesamtgewicht des Pfropfcopolymerisats, einer vernetzten Pfropfgrundlage bestehend aus einem vernetzten Copolymerisat von n-Butylacrylat und/oder 2-Ethylhexylacrylat, oder aus einem vernetzten Acrylsäureester-Ethylen-Vinylacetat-Copolymerisat mit einem Acrylat-Gehalt von 35 bis 70 Gew.-% oder Gemischen der genannten Copolymerisate, wobei die Copolymerisate mit 0.05 bis 0.5 Gew.-% eines oder mehrerer copolymerisierten, mehrfach ethylenisch ungesättigten Comonomeren aus der Gruppe Diallylphthalat, Allylmethacrylat, Ethylenglykoldimethacrylat, Butylenglykoldiacrylat, Trimethylenglykoldiacrylat, Trimethyolpropantriacrylat vernetzt sind,
zur Herstellung eines Farbmasterbatches.

7. Farbmasterbatch umfassend:
ein Vinylchlorid-Pfropfcopolymerisat enthaltend:
A) 35 bis 60 Gew.-%, bezogen auf das Gesamtgewicht des Vinylchlorid-Pfropfcopolymerisats, eines aufgepfropften, vernetzten Copolymers, herstellbar durch Copolymerisation von:
80 bis 99.95 Gew.-% Vinylchlorid,
0.05 bis 3.0 Gew.-% mehrfach ethylenisch ungesättigten Comonomeren sowie
0 bis 19.95 Gew.-% weiteren copolymerisierbaren, ethylenisch ungesättigten Comonomeren,
oder
35 bis 60 Gew.-%, bezogen auf das Gesamtgewicht des Vinylchlorid-Pfropfcopolymerisats, eines aufgepfropften (Co)polymers, herstellbar durch (Co)polymerisation von
80 bis 100 Gew.-% Vinylchlorid sowie
0 bis 20 Gew.-% weiteren copolymerisierbaren, ethylenisch ungesättigten Comonomeren, bei einer Polymerisationstemperatur von 0 bis 45°C,
und
B) 40 bis 65 Gew.-%, bezogen auf das Gesamtgewicht des Vinylchlorid-Propfcopolymerisats, einer vernetzten Pfropfgrundlage enthaltend
ein vernetztes Acrylsäureester-Copolymerisat mit 0.01 bis 5 Gew.-% mehrfach ethylenisch ungesättigten Comonomer-Einheiten sowie gegebenenfalls weiteren mit Acrylsäureestern copolymerisierbaren Comonomeren,
und mindestens ein Pigment.

8. Farbmasterbatch nach Anspruch 7 umfassend:
ein Vinylchlorid-Pfropfcopolymerisat enthaltend:
A) 40 bis 55 Gew.-%, bezogen auf das Gesamtgewicht des Pfropfcopolymerisats, eines aufgepfropften, vernetzten Copolymers aus
98.5 bis 99.9 Gew.-% Vinylchlorid sowie
0.1 bis 1.5 Gew.-% eines oder mehrerer mehrfach ethylenisch ungesättigter Comonomere aus der Gruppe Diallylphthalat, Allylmethacrylat, Ethylenglykoldimethacrylat, Butylenglykoldiacrylat, Trimethylenglykoldiacrylat, Trimethyolpropantriacrylat,
oder
40 bis 55 Gew.-%, bezogen auf das Gesamtgewicht des Vinylchlorid-Pfropfcopolymerisats, eines aufgepfropften VC-Polymers, herstellbar durch Pfropfpolymerisation von Vinylchlorid bei einer Polymerisationstemperatur von 0 bis 45°C, und
B) 45 bis 60 Gew.-%, bezogen auf das Gesamtgewicht des Pfropfcopolymerisats, einer vernetzten Pfropfgrundlage bestehend aus einem vernetzten Copolymerisat von n-Butylacrylat und/oder 2-Ethylhexylacrylat, oder aus einem vernetzten Acrylsäureester-Ethylen-Vinylacetat-Copolymerisat mit einem Acrylat-Gehalt von 35 bis 70 Gew.-% oder Gemischen der genannten Copolymerisate, wobei die Copolymerisate mit 0.05 bis 0.5 Gew.-% eines oder mehrerer copolymerisierten, mehrfach ethylenisch ungesättigten Comonomeren aus der Gruppe Diallylphthalat, Allylmethacrylat, Ethylenglykoldimethacrylat, Butylenglykoldiacrylat, Trimethylenglykoldiacrylat, Trimethyolpropantriacrylat vernetzt sind, und mindestens ein Pigment.
